# EUROPÄISCHE PATENTSCHRIFT

(11) **EP 3 119 636 B1**
(45) Veröffentlichungstag und Bekanntmachung des Hinweises auf die Patenterteilung: **08.01.2020**
(21) Anmeldenummer: 15703964.5
(22) Anmeldetag: 05.02.2015
(51) Int. Cl.: B60L 5/08, B60L 5/16, B60L 5/36, B66C 13/12, B60L 5/38, B66C 19/00, F16G 13/20

(54) **STROMABNEHMERSYSTEM MIT TELESKOPARM FÜR KRANE, CONTAINERKRANE, ERTGS UND FÖRDEREINRICHTUNGEN**
CURRENT-COLLECTOR SYSTEM HAVING A TELESCOPIC ARM FOR CRANES, CONTAINER CRANES, ERTGS, AND CONVEYING DEVICES
SYSTÈME COLLECTEUR DE COURANT À BRAS TÉLESCOPIQUE POUR GRUES, GRUES À CONTENEURS, GRUES À PORTIQUE ÉLECTRIQUES SUR ROUES DE CAOUTCHOUC ET ÉQUIPEMENTS DE CONVOYAGE

(30) Priorität: 19.03.2014 DE 102014103741
(43) Veröffentlichungstag der Anmeldung: 25.01.2017
(73) Patentinhaber: Paul Vahle GmbH & Co. KG, 59174 Kamen (DE)
(72) Erfinder: VAHLE, Werner, B-4850 Plombieres (BE); RAABE, Michael, 59368 Werne (DE); MÜLLER, Thomas, 59174 Kamen (DE)
(74) Vertreter: Lenzing Gerber Stute
(86) Internationale Anmeldenummer: PCT/EP2015/052421
(87) Internationale Veröffentlichungsnummer: WO 2015/139879

(56) Entgegenhaltungen:
- WO-A1-2010/070915
- WO-A1-2012/130630
- WO-A2-2006/130189
- WO-A2-2010/054852

## Beschreibung

Die vorliegende Erfindung betrifft ein Stromabnehmersystem für ein längs einer Stromschienenanordnung verfahrbares Fahrzeug, mit mindestens einem Stromabnehmerwagen und daran angeordneten Stromabnehmerkontakten, welche mit Stromschienen der Stromschienenanordnung verbindbar sind, und einem am Fahrzeug befestigbaren bzw. befestigten Teleskoparm, welcher mittels eines Verstellantriebes aus- und/oder einfahrbar ist

Aus der WO 2010/054852 A2 ist ein gattungsmäßiges Stromabnehmersystem bekannt, welches einen Teleskoparm aufweist, an dessen freiem Ende ein Stromabnehmerwagen vertikal verschieblich gelagert ist. Der Teleskoparm wird dabei mittels eines elektrischen, hydraulischen oder pneumatischen Antriebs horizontal relativ zur Stromschienenanordnung zugestellt, bis Anschläge des Stromabnehmerwagens gegen eine Prallplatte stoßen. Die vertikale Zustellung des Stromabnehmerwagens zu den Stromschienen erfolgt mechanisch über eine Einfahrrampe, wobei jeweils eine Einfahrrampe an jedem Ende der Stromschienenanordnung angeordnet ist. Nachteilig hierbei ist, dass für das vertikale Zustellen ein gewisser Platz benötigt wird.

Aus der WO 2012/130630 A9 ist ein System bekannt, bei dem die horizontale Bewegung des Teleskoparms und/oder die vertikale Zustellung des Stromabnehmerwagens relativ zur Stromschienenachse über ein Hubsystem mit Riemenantrieb, welcher elastisch und flexibler ausgebildet sein soll, erfolgt. Die Einfädelung der Stromabnehmer in die Stromschienen erfolgt auch hier über Einführungstrichter bei Fahrt in Längsrichtung der Trasse.

Die Einführtrichter können kürzer ausgebildet werden als die aus der WO 2010/054852 A2 bekannten Einfahrrampen.

Weiterhin ist aus der WO 2006/130189 A2 ein Teleskoparm bekannt, der an einem Wagen anordenbar ist und Medikamentenverpackungen aus einem Regallager entnimmt. Der Teleskoparm wird mittels einer Schubkette angetrieben, weist jedoch keinen vertikalen Wagen, wie etwa einen Stromabnehmerwagen, auf.

Ferner ist aus der WO 2010/070915A1 eine Umlenkung in einer Bewegungsanordnung für blockförmige Körper bekannt. Diese Körper sind Schubkettengliedern ähnlich, hängen aber nicht miteinander zusammen, wodurch sie ohne Hilfsmittel nur Schubkräfte zwischen einander übertragen können und eine durchgehende Führung benötigen.

Der Erfindung liegt die Aufgabe zugrunde, ein Stromabnehmersystem bereitzustellen, welches einfach in seinem Aufbau ist.

Diese Aufgabe wird vorteilhaft dadurch gelöst, dass der Verstellantrieb mindestens eine Schubkette und mindestens einen Schubkettenantrieb aufweist. Durch die vorteilhafte Verwendung einer Schubkette, können die einzelnen Teleskopstufen des Teleskoparmes im Gegensatz zu einem pneumatisch oder hydraulisch arbeitenden Teleskoparm, wie er aus WO 2010/054852 A2 vorbekannt ist, in ihrem Aufbau einfach ausgebildet sein. Im Gegensatz zu dem aus WO 2012/130630 A9 bekannten Teleskoparm müssen die einzelnen Teleskopstufen sich nicht gegenseitig antreiben.

Durch den einfachen Aufbau ist es vorteilhaft möglich, im Gegensatz zu den aus WO 2010/054852 A2 und WO 2012/130630 A9 bekannten Teleskoparmen eine größere Anzahl an Teleskopstufen zu verwenden, wodurch, bedingt durch die jeweils kürzer ausbildbaren Teleskopstufen, die Gesamtlänge des eingefahrenen Stromabnehmersystems kürzer ist.

Durch Verwendung des erfindungsgemäßen Schubkettenantriebes und der erfindungsgemäßen Schubkettenanordnung ist es vorteilhaft möglich, die für das horizontale Ein- und Ausfahren des Teleskoparmes verwendete Schubkette auch für das vertikale Verstellen des Stromabnehmerwagens zu verwenden.

Die Schubkettenanordnung weist einzelne Schubkettenglieder auf, welche gelenkig miteinander verbunden sind, wobei mittels der Schubkettenanordnung bei Ausrichtung der Schubkettenglieder zueinander in Schubrichtung eine Schubkraft auf den Abnehmerwagen und/oder auf die am weitesten ausfahrbare Teleskopstufe aufbringbar ist. Durch eine Umlenkeinrichtung, welche an der am weitesten ausfahrbaren Teleskopstufe angeordnet sein kann, kann die Schubkette um 90° in die Vertikale umgelenkt werden und dann zum Anheben und/oder Absenken des Stromabnehmerwagens genutzt werden. Je nachdem wie die Stromschienenanordnung ausgebildet ist, muss der Stromabnehmerwagen zum Kontaktieren der Stromabnehmer mit den Stromschienen nach dem horizontalen Ausfahren des Teleskoparmes entweder von unten nach oben verstellt, d.h. angehoben, oder von oben nach unten herabgelassen, d.h. abgesenkt, werden.

Die Schubkettenanordnung kann durch eine einzelne Schubkette, bestehend aus mehreren Schubkettengliedern, gebildet sein. Es ist jedoch auch möglich, dass die Schubkettenanordnung mehr als eine Schubkette oder mehrere Schubkettensegmente umfasst, welche hintereinander und/oder parallel zueinander angeordnet sind.

Das Positionieren des Stromabnehmerwagens relativ zu der Stromschienenanordnung kann mittels verschiedener Abläufe /Ausführungsvarianten erfolgen.

Sofern der Stromabnehmerwagen zum Einfädeln in die Stromschienenanordnung nach dem horizontalen Ausfahren des Teleskoparmes angehoben werden muss, so reicht in der Regel der Schubkettenantrieb für das horizontale Ausfahren des Teleskoparmes und das vertikale Anheben des Stromabnehmerwagens aus, sofern zusätzlich eine Anschlagplatte, welche an der Stromschienenanordnung angeordnet ist, verwendet wird und das Eigengewicht des Stromabnehmerwagens hinreichend groß ist. Bei eingefahrenem Teleskoparm befindet sich der Stromabnehmerwagen bei dieser Ausführungsform in der unteren Position innerhalb der am Teleskoparmende angebrachten vertikalen Linearführung. Wenn die Schubkette zum Ausfahren des Teleskoparmes über den Schubkettenantrieb angetrieben wird, bewirkt das Eigengewicht des Stromabnehmerwagens, dass zunächst der Teleskoparm horizontal ausgefahren bzw. teleskopiert wird. Der Stromabnehmerwagen ruht dabei, aufgrund seines Eigengewichts weiterhin in der unteren Position der Vertikalführung. Bei Auftreffen des Stromabnehmerwagens auf die die Endposition bestimmende Anschlagplatte der Stromschienenanordnung wird die Schubkraft der Schubkette mittels der Umlenkeinrichtung umgelenkt und hebt den Stromabnehmerwagen bis zu einem oberen Anschlag, der die vertikale Endposition bestimmt. Während des vertikalen Anhebens fährt der Teleskoparm aufgrund der an ihm angreifenden Kräfte nicht ein.

Sofern das Eigengewicht des Stromabnehmerwagens nicht ausreicht, so dass er während des horizontalen Ausfahrens des Teleskoparmes seine unterste Position verlässt und damit vertikal angehoben wird, bevor der Stromabnehmerwagen die Anschlagplatte kontaktiert hat, ist es erforderlich, den Stromabnehmerwagen mittels einer Haltevorrichtung so lange in seiner untersten Position zu halten, bis der Stromabnehmerwagen die Anschlagplatte erreicht hat. Alternativ kann die Umlenkeinrichtung abgebremst oder blockiert werden. Auch ist es alternativ möglich, die Relativbewegung zwischen Schubkette und der am weitesten herausfahrbaren Teleskopstufe zu verhindern, indem eine an der Teleskopstufe angeordnete steuerbare Arretierungsvorrichtung in die Schubkette eingreift. Die Arretierungsvorrichtung kann auch mechanisch z.B. in Form einer Klinke ausgebildet sein, welche beim Kontaktieren des Stromabnehmerwagens mit der Anschlagplatte aus der Schubkette ausklinkt und somit die Schubkette und den vertikalen Anhebevorgang frei gibt.

Sofern der Stromabnehmerwagen zum Einfädeln in die Stromschienenanordnung nach dem horizontalen Ausfahren des Teleskoparmes abgesenkt werden muss, würde ohne geeignete Maßnahmen, wie. z.B. das Blockieren der Umlenkeinrichtung oder das Vorsehen einer Schubkettenbremse oder Arretiereinrichtung für die Schubkettenanordnung, das Eigengewicht den Stromabnehmerwagen beim Antreiben der Schubkette zunächst nach unten ziehen, ohne dass der Teleskoparm horizontal ausfahren würde. Bei eingefahrenem Teleskoparm befindet sich der Stromabnehmerwagen bei dieser Ausführungsform in der oberen Position innerhalb der am Teleskoparmende angebrachten vertikalen Linearführung. Vor dem horizontalen Ausfahren des Teleskoparmes muss zunächst sichergestellt werden, dass sich die Schubkette relativ zur Umlenkeinrichtung und/oder der am weitesten ausfahrbaren Teleskopstufe, welche auch als innerste Teleskopstufe bezeichnet werden kann, an der auch die Umlenkeinrichtung angeordnet ist, bewegen und damit ein ungewolltes, verfrühtes Absenken des Stromabnehmerwagens erfolgen kann. Dies kann vorteilhaft mittels einer Kettenbremse z.B. in Form einer Blockiervorrichtung, die die Umlenkvorrichtung blockiert und/oder einer kraft- und/oder formschlüssigen lösbaren Verbindung bzw. Verriegelung zwischen Schubkette und innerster Teleskopstufe, erfolgen. Bei Erreichen der horizontalen Endposition, welche durch die Anschlagplatte definiert oder mittels eines Sensors feststellbar ist, wird die Blockierung der Umlenkeinrichtung bzw. Verriegelung (Kettenbremse) zwischen innerstem Teleskoparmelement und Schubkette gelöst, wonach dann bei weiterem Ausfahren der Schubkette mittels des Schubkettenantriebes diese um die Umlenkvorrichtung umgelenkt wird und der Stromabnehmerwagen absenkt, bis die vertikale Endposition, die z.B. mittels eines Sensors erfasst wird, erreicht ist. Da nach dem Lösen der Kettenbremse bzw. der Blockiervorrichtung bei Absenkung des Stromabnehmerwagens nach unten die Gewichtskraft des Stromabnehmerwagens ein Zurückrollen bzw. horizontales Einfahren des Teleskoparmes bewirken würde, müssen entsprechende Maßnahmen vorgesehen werden, um dies zu verhindern. So kann die Blockiervorrichtung auch als Bremseinrichtung ausgebildet sein, mit der die Umlenkvorrichtung abbremst und auch blockieren kann. Durch das Aufbringen einer Bremskraft auf die Umlenkvorrichtung wird eine Schubkraft erzeugt, welche auf die Umlenkeinrichtung und damit auf die innerste Teleskopstufe wirkt und diese horizontal nach außen treibt und somit sicher vermieden wird, dass der Teleskoparm beim Absenken des Stromabnehmerwagens einfährt. Die Bremseinrichtung kann dabei anhand der horizontalen Position und/oder Beschleunigung des Stromabnehmerwagens gesteuert oder geregelt werden, wobei die Position und/oder Beschleunigung mittels Sensoren ermittelt wird. Auch können steuerbare Arretierungsvorrichtungen eine Relativbewegung der einzelnen Teleskopstufen zueinander blockieren. Ebenso ist es möglich, mittels einer Dämpfungseinrichtung und/oder einer vorgespannten Feder die Relativbewegung zwischen Kette und am weitesten ausfahrbarer Teleskopstufe so weit zu verlangsamen, dass die Kette so schnell nachgeführt wird, dass sich der Stromabnehmerwagen nicht absenkt.

Auch kann eine Vorrichtung derart ausgebildet und angeordnet sein, dass mit ihrer Hilfe die Beschleunigung der am weitesten ausfahrbaren Teleskopstufe relativ zu der benachbarten Teleskopstufe und somit die Geschwindigkeit der Relativbewegung zwischen diesen beiden Teleskopstufen verringerbar oder einstellbar, insbesondere auf NULL einstellbar, ist.

Es ist selbstverständlich auch möglich, dass der Teleskoparm horizontal ausgefahren wird, wobei gleichzeitig der Stromabnehmerwagen vertikal in die richtige Höhe verstellt wird. Dies ist jedoch nur dann möglich, wenn mittels Sensoren oder einer Bildauswertung die Position der Stromschienenanordnung relativ zum Fahrzeug ermittelt bzw. bekannt ist. Das gleichzeitige horizontale und vertikale Verstellen des Stromabnehmerwagens ist z.B. mit einem Stromabnehmersystem möglich, bei dem auch die vertikale Verstellung des Stromabnehmerwagens über die Schubkette erfolgt. So kann die vertikale Verstellung durch den zusätzlichen Antrieb der Umlenkeinrichtung oder eine gesteuerte Bremseinrichtung für die Umlenkeinrichtung gesteuert bzw. geregelt werden.

In einer weiteren Ausführungsform kann die Umlenkeinrichtung, welche insbesondere durch eine Zahnradeinrichtung gebildet sein kann, mittels eines Umlenkantriebs angetrieben, antreibbar und/oder festsetzbar sein. Der Umlenkantrieb wird dabei von einer Steuerungseinheit des Stromabnehmersystems gesteuert, welche auch den Schubkettenantrieb steuert. Zum Ausfahren des Teleskoparmes wird der Umlenkantrieb derart angesteuert, dass er ein solches Antriebs- bzw. Haltemoment auf die Umlenkeinrichtung ausübt, dass sich die Schubkette relativ zur Umlenkeinrichtung und damit auch relativ zur am weitesten ausfahrbaren Teleskopstufe nicht bewegt. Der Umlenkantrieb kann danach zum vertikalen Verstellen, insbesondere Absenken, des Stromabnehmerwagens mit dem Schubkettenantrieb synchronisiert werden, so dass sich die Länge des zwischen dem Schubkettenantrieb und der Umlenkeinrichtung befindlichen Schubkettenabschnittes und damit auch die Länge des ausgefahrenen Teleskoparmes nicht ändert.

In den zuvor beschriebenen Ausführungsformen kann die Schubkette mit ihrem freien Ende unmittelbar verbunden sein. Es ist jedoch auch möglich, dass die Schubkette über ein Getriebe mit dem Stromabnehmerwagen in Verbindung ist. Sofern der Stromabnehmerwagen mittels eines gesonderten Vertikalantriebes verstellt wird, kann dieser durch die Schubkette antreiben werden. In diesem Fall wird die Schubkette um die Welle der Umlenkeinrichtung herumgeführt, wobei die Schubkette die Umlenkeinrichtung verdreht und die Drehung der Welle zum Antrieb des Vertikalantriebes, welche den Stromabnehmerwagen vertikal z.B. mittels einer Spindel-, eines Riemen-, einer Ketten- oder Scherenhubgetriebes anhebt und/oder absenkt.

Nach Erreichen der vertikalen Endposition fädeln die Stromabnehmer durch Verfahren des Fahrzeugs in Fahrtrichtung über Einführungstrichter in die Stromschienen ein, wobei gleichzeitig der Stromabnehmerwagen mit seinen Laufrollen auf Führungsschienen bzw. -rohre auf- bzw. einfährt, so dass die Stromschienenanordnung der Stromabnehmerwagen beim weiteren Verfahren des Fahrzeuges entlang der Trasse relativ zu den Stromschienen in Position hält und führt. Damit beim Verfahren des Fahrzeugs längs der Stromschienenanordnung Toleranzen und Relativbewegungen des Fahrzeuges zur Stromschienenanordnung vom Stromabnehmersystem ausgeglichen werden können, wird vorteilhaft nach dem Einfädeln der Stromabnehmer in die Stromschienenanordnung der Schubkettenantrieb freigeschaltet, sodass während des weiteren Betriebs nur noch geringe und damit zu vernachlässigende mechanische Kräfte vom Teleskoparm auf den Stromabnehmerwagen ausgeübt werden. Gleiches gilt auch für einen eventuell vorgesehenen Vertikalantrieb oder eine Schubkettenumlenkeinrichtung, welche für die vertikale Verstellung des Stromabnehmerwagens genutzt wird.

Sofern der Teleskoparm durch sonstige Maßnahmen, wie z.B. einer Brems- und/oder Dämpfungseinrichtung oder sonstiger Arretierungs- bzw. Haltungsvorrichtung, nach dem horizontalen Ausfahren daran gehindert worden ist, ungewollt wieder einzufahren, sind auch diese nach dem Einfädeln freizuschalten, so dass der Teleskoparm aufgrund der von außen wirkenden Kräfte seine Länge beim weiteren Verfahren des Fahrzeuges ändern kann.

Das Stromabnehmersystem kann einen Grundkörper aufweisen, mit dem es an einem Fahrzeug befestigbar ist. Im oder am Grundkörper kann bevorzugt der Schubkettenantrieb und/oder der Schubkettenvorratsspeicher angeordnet sein. Zudem kann bevorzugt die erste Teleskopstufe in horizontaler Richtung verschieblich in oder an dem Grundkörper geführt sein.

Im Schubkettenvorratsspeicher wird der noch nicht zur Schubkraftausübung verwendete Teil der Schubkette bevorratet, wobei der im Schubkettenvorratsspeicher befindliche Teil der Schubkette je nach verfügbarem Raum z.B. auf einer Trommel aufgewickelt oder mäanderförmig angeordnet sein kann.

Da die Schubkette nur zu einer Seite hin umgelenkt werden kann, es aber aufgrund der Kettenführung notwendig ist, die Schubkette in zwei Richtungen umzulenken, was z.B. der Fall sein kann, wenn die Antriebsachse des Schubkettenantriebs, nachfolgend als erste Achse bezeichnet, und die Achse der Umlenkeinrichtung, welche nachfolgend als zweite Achse bezeichnet wird, nicht parallel zueinander ausgerichtet sind, so kann dieses Problem durch zwei zueinander verdreht miteinander verbundene Schubkettensegmente gelöst werden, wobei das eine erste Schubkettensegment so im Raum angeordnet ist, dass es sich um die erste Achse herum in die erste Richtung führen lässt, und das zweite Schubkettensegment derart im Raum angeordnet ist, dass es sich um die zweite Achse herum in die zweite Richtung führen lässt.

Es ist generell möglich, dass die Schubkette aus mehr als einem Schubkettensegment gebildet ist, wobei zwei Schubkettensegmente, welche jeweils durch mehrere Kettenglieder gebildet sind, durch ein starres Verbindungsglied, z.B. in Form von Stangen oder Rohren, miteinander in Verbindung sein können. Unter einem Schubkettensegment wird dabei ein Kettenabschnitt mit mehr als einem Kettenglied verstanden. Hierdurch kann die Anzahl der benötigten Schubkettenglieder und somit vorteilhaft die Kosten und das Gewicht des Stromabnehmersystems reduziert werden. Auch erhöht sich durch den Einsatz von entsprechenden Verbindungsgliedern vorteilhaft die übertragbare Schubkraft der Schubkette.

Die Schubkette muss lediglich eine genügend große Schubkraft übertragen bzw. auf die am weitesten ausfahrbare Teleskopstufe und/oder den Stromabnehmerwagenaufbringen können. Besonderes Kennzeichen einer Schubkette, welche auch rückensteife Kette genannt wird, ist, dass die Kette durch Schubelemente am Kettenrücken nur in einer Raumrichtung einknicken kann. Durch Einleitung der Schubkraft zwischen der Gelenkebene und des Schubgliedes versteift sich die Kette unter Druckbelastung.

Sofern eine einteilige Schubkette, bestehend aus mehreren Kettengliedern, welche gelenkig miteinander in einer Reihe verbunden sind, verwendet wird, so kann diese Schubkette entweder ungestützt betrieben, durch Auflageflächen gestützt oder mittels Schienen geführt werden. Aufgrund der Verwendung von ineinander geschachtelten Teleskopstufen ist die Verwendung einer ungestützten oder gestützten Schubkette konstruktiv einfach zu realisieren. Die für die gestützte Schubkette benötigte Auflagefläche kann dabei durch horizontal und/oder vertikal angeordnete Wandungen, z.B. in Form von einfachen Blechen, gebildet sein. Für die vertikale Verstellung kann eine entsprechende Auflage- bzw. Anlagefläche entlang der vertikalen Führung an der am weitesten ausfahrbaren Teleskopstufe angeordnet sein.

Zur Erhöhung des Korrosionsschutzes, z.B. in maritimer Umgebung, kann die Schubkette durch eine Ummantelung, z.B. in Form eines Faltenbalges oder mehrerer Faltenbälge, geschützt sein. So ist es besonders vorteilhaft, wenn der Bereich der Schubkettenanordnung, der zur vertikalen Verstellung des Stromabnehmerwagens dient, mittels einer entsprechenden Ummantelung gegen äußere Einflüsse geschützt ist. So kann der Schubkettenabschnitt des entsprechenden Schubkettensegmentes, welcher von der Umlenkeinrichtung in die Vertikale umgelenkt wurde, mittels einer ersten Ummantelung, insbesondere eines Faltenbalgs, geschützt sein. Der vor der Umlenkeinrichtung befindliche horizontal verlaufende Teil des entsprechenden Schubkettensegmentes kann ebenfalls mittels z.B. eines Faltenbalges ummantelt sein. Generell reicht es jedoch aus, den Teleskoparm entsprechend zu kapseln, so dass die horizontal im Teleskoparm verlaufenden Schubkettenabschnitte durch die Hülle des Teleskoparmes bzw. der einzelnen Teleskopstufen, gegen äußere Einflüsse geschützt sind. Bei Einsatz eines Faltenbalges kann dieser auch zur permanenten Schmierung des ummantelten Schubkettenabschnittes dienen, wobei er hierzu mit entsprechendem Kettenöl bzw. -fett gefüllt ist. Entsprechende Dichtungen sind vorzusehen, damit das Kettenöl bzw. -fett nicht unkontrolliert aus dem Faltenbalg ausläuft. Es ist jedoch selbstverständlich auch möglich, dass andere Formen der Schmierung, insbesondere mittels Graphit, vorgesehen sind.

Der Teil der Schubkettenanordnung, welcher noch nicht vom Schubkettenantrieb in den Teleskoparm zur Erzeugung einer Schubkraft verstellt worden ist, kann als Vorratskette bezeichnet werden. Die Einhausung der Vorratskette kann, wie beim zuvor beschriebenen Faltenbalg, mit Schmiermittel, insbesondere Kettenöl oder -fett gefüllt sein.

Es versteht sich von selbst, dass der zuvor beschriebene Schubkettenantrieb auch derart ausgebildet sein kann, dass der Schubkettenantrieb die Schubkette nicht umlenkt, sondern ein gerades Schubkettenstück antreibt.

Durch die Verwendung eines Schubkettenantriebes ergeben sich die nachfolgend aufgelisteten Vorteile:
1. Der Teleskoparm kann mehrteilig ausgeführt werden und wird dadurch kürzer, bzw. es können größere Horizontalwege realisiert werden;
2. lediglich ein Antrieb und eine Schubkette sind für die horizontale und vertikale Bewegung des Stromabnehmerwagens erforderlich;
3. wenige Bauteile;
4. die Schubkette gewährleistet eine hohe Wiederholgenauigkeit bei der Positionierung;
5. das Stromabnehmersystem ist leicht und kompakt;
6. geringe Kosten.

Nachfolgend wird das erfindungsgemäße Stromabnehmersystem anhand von Zeichnungen näher erläutert.

Es zeigen:
- Fig. 1:: Seitenansicht auf ein eingefahrenes Stromabnehmersystem;
- Fig. 2:: Längsschnitt durch ein eingefahrenes Stromabnehmersystem gemäß Figur 1;
- Fig. 3:: Draufsicht auf ein eingefahrenes Stromabnehmersystem gemäß Figur 1;
- Fig. 4:: Seitenansicht auf ein ausgefahrenes Stromabnehmersystem, bei dem der Stromabnehmerwagen jedoch noch nicht vertikal nach oben verstellt ist;
- Fig. 5:: Draufsicht auf das ausgefahrene Stromabnehmersystem gemäß Figur 4;
- Fig. 6a:: Schnitt durch den Teleskoparm mit daran angeordneter vertikaler Führung, wobei zwei alternative Anordnungen des Schubkettenspeichers dargestellt sind;
- Fig. 6b:: Längsschnitt durch eine weitere mögliche Ausführungsform des erfindungsgemäßen Stromabnehmersystems, bei dem die Schubkette zweimal in die gleiche Richtung umgelenkt ist;
- Fig. 7a:: Darstellung einer ersten möglichen Ausführung der Umlenkung der Schubkette mittels Umlenkrollen zum vertikalen Verstellen des Stromabnehmerwagens;
- Fig. 7b:: Darstellung einer zweiten möglichen Ausführung der Umlenkung der Schubkette mittels Umlenkführung zum vertikalen Verstellen des Stromabnehmerwagens;
- Fig. 8a-c:: Darstellung von drei Bewegungsphasen beim vertikalen Verstellen des Stromabnehmerwagens mittels einer Umlenkführung gemäß Figur 7b;
- Fig. 9a-9d:: Darstellung der vier Bewegungsphasen: 1. Positionierung des Fahrzeugs; 2. Ausfahren des Teleskoparmes bis zum Anschlag an die Prallplatte der Trasse; 3. Anheben des Stromabnehmerwagens; 4. Einfahren in die Stromschienen und Führungsrohre der Trasse der Stromschienenanordnung;
- Fig. 10a u. b:: Stromabnehmersystem mit absenkbarem Stromabnehmerwagen;
- Fig. 11a u. b:: Darstellung zweier verwendbarer Schubketten;
- Fig. 12:: Quer- und Längsschnitt durch eine Schubkettenführung;
- Figur 13:: Stromabnehmersystem mit Spindelantrieb zum vertikalen Verstellen des Stromabnehmerwagens, wobei der Spindelantrieb von der Schubkettenanordnung antreibbar ist;

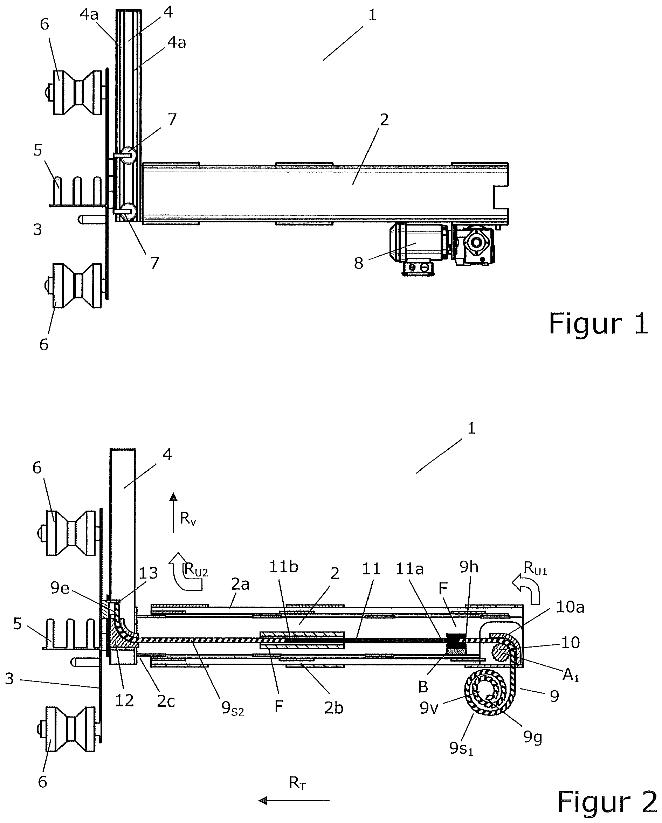

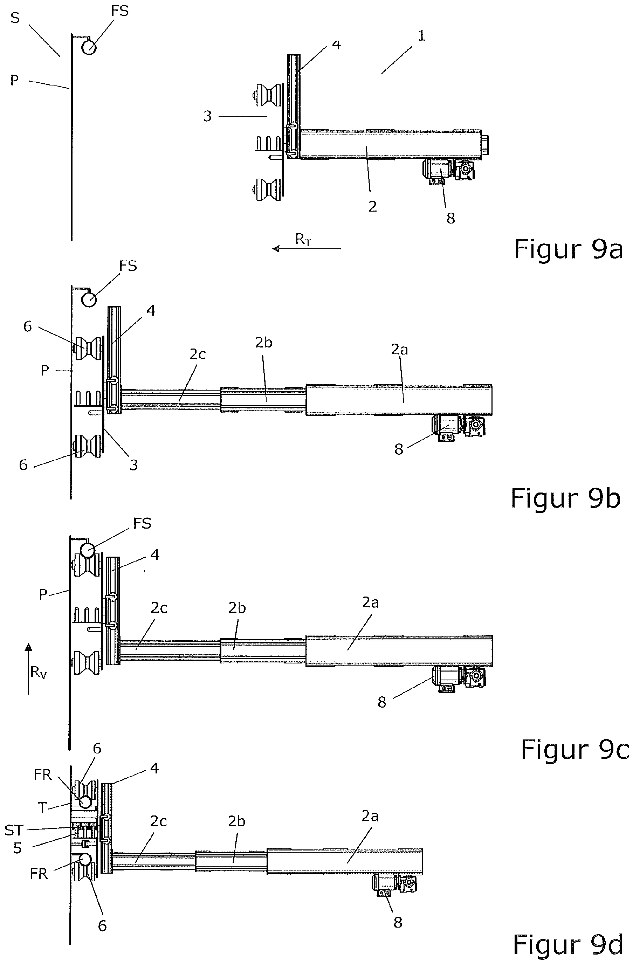

Die Figur 1 zeigt eine erste mögliche Ausführungsform eines erfindungsgemäßen Stromabnehmersystems 1 mit seinem Teleskoparm 2. Am freien linken Ende des Teleskoparmes 2 ist eine vertikale Führung 4 angeordnet, an der der Stromabnehmerwagen 3 vertikal verschieblich gelagert ist. Die Führung 4 weist sich vertikal erstreckende Führungen 4a, z.B. in Form von Rohren, auf, an denen die Rollen 7 des Stromabnehmerwagens 3 geführt sind und entlangrollen. Am Stromabnehmerwagen 3 sind die Stromabnehmer 5 angeordnet, die beim Einfahren in die Trasse T, siehe Figur 9d, mit Stromschienen ST der Stromschienenanordnung S in Kontakt gebracht werden. Der Stromabnehmerwagen 3 weist zudem Rollen 6, die als sog. Diabolorollen ausgebildet sind, auf, die mit in den Figuren 9a bis 9d dargestellten Trassenführungen FS und FR, welche als Rohre ausgebildet sein können, zusammenwirken und den Stromabnehmerwagen 3 nach dem Einfahren und Einführen in die Trasse führen und in Position relativ zu den Stromschienen halten. An der rechten unteren Seite ist am Teleskoparm 2 der Schubkettenantrieb 8 angeordnet. Eine Schubkette ist in dieser Darstellung noch nicht dargestellt. Der Teleskoparm 2 besteht aus mehreren Teleskopstufen und wird anhand der nachfolgenden Zeichnungen noch näher beschrieben.

Die Figur 2 zeigt einen Längsschnitt durch das in Figur 1 dargestellte Stromabnehmersystem 1 im Bereich der Schubkettenanordnung 9. Der Teleskoparm 2 ist durch die drei Teleskopstufen 2a, 2b und 2c gebildet, wobei die vertikale Führung 4 für den Stromabnehmerwagen 3 an der am weitesten ausfahrbaren Teleskopstufe 2c angeordnet ist. Die erste Teleskopstufe 2a ist fest mit dem Fahrzeug verbunden und kann daher nicht teleskopiert werden, wird aber dennoch als Teleskopstufe bezeichnet, denn sie dient als Führung für die zweite Teleskopstufe 2b, welche wiederum die dritte Teleskopstufe 2c führt.

Die Schubkettenanordnung 9 setzt sich zusammen aus den beiden Schubkettensegmenten 9ₛ₁ und 9ₛ₂ sowie dem dazwischen angeordneten steifen Kraftübertragungselement 11. Das eine Ende 9h des ersten Schubkettensegmentes 9ₛ₁ ist mit dem ersten Ende 11a des steifen Kraftübertragungselementes 11 verbunden. Das zweite Schubkettensegment 9ₛ₂ ist mit seinem ersten Ende 9f mit dem zweiten Ende 11b des steifen Kraftübertragungselementes 11 verbunden und wirkt mit seinem anderen Ende 9e mit einem Anschlag 13 zusammen, welcher fest mit dem Stromabnehmerwagen 3 verbunden ist. Selbstverständlich ist es auch möglich, dass das Schubkettenende 9e mit dem Teil 13 verbunden ist.

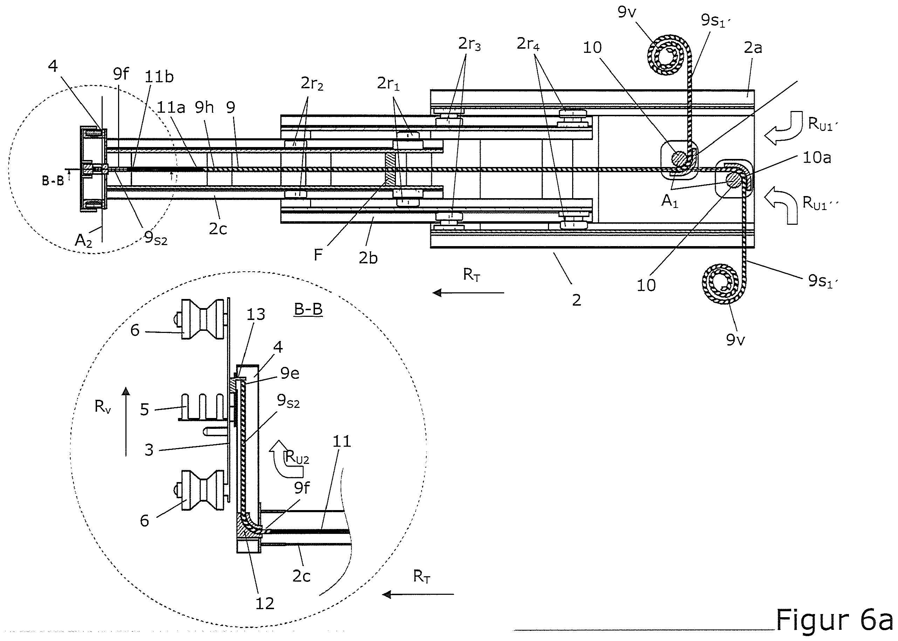

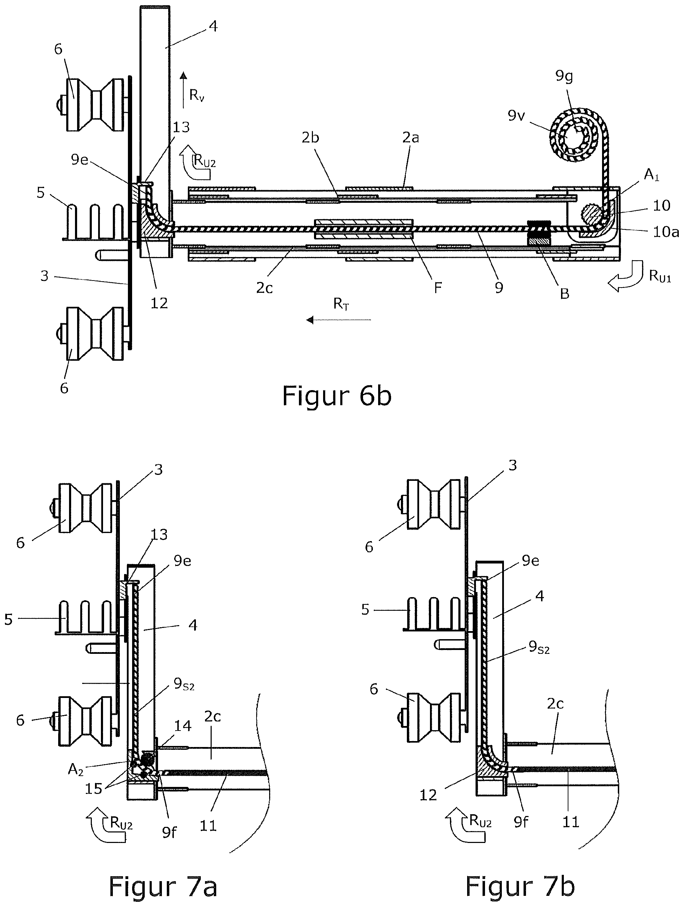

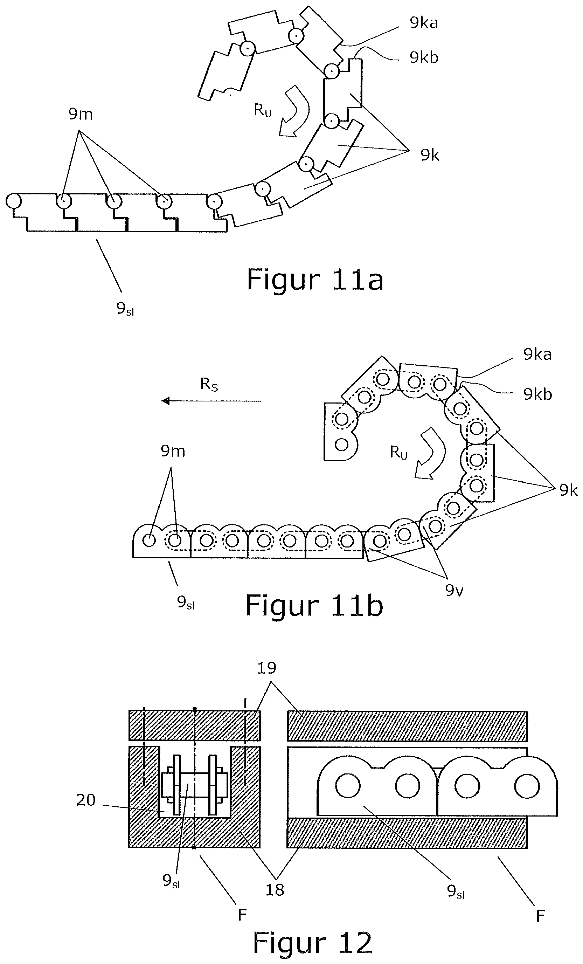

Das Schubkettensegment 9ₛ₁ ist derart konstruiert, dass es sich lediglich mittels des Umlenkzahnrades 10 und der Führung 10a in die erste Richtung R_{U1} umlenken lässt. Entgegen der Richtung R_{U1} ist das Schubkettensegment 9ₛ₁ knicksteif ausgebildet. Mögliche Ausführungen von Schubketten sind in den Figuren 11a und 11b dargestellt und beschrieben. Die Schubkettenanordnung 9 wird mittels des Umlenkzahn- bzw. Umlenkkettenrades 10 zum Ein- und Ausfahren des Teleskoparmes 2, sowie zumindest zum Anheben des Stromabnehmerwagens 3 angetrieben. Sofern der Antrieb 8 stromfrei geschaltet wird, kann sich die Schubkette 9 aufgrund der von außen auf das Stromabnehmersystem wirkenden Kräfte frei um das Umlenkkettenrad 10 herum bewegen, so dass der Teleskoparm 2 ohne größere Gegenkräfte frei ein- und ausgefahren werden kann, um den sich ändernden Abstand zwischen Fahrzeug und Trasse T auszugleichen. Ebenso kann der Stromabnehmerwagen 3 entlang der Führung 4 vertikal frei verfahren, sobald der Schubkettenantrieb 8 stromfrei geschaltet ist. Sofern die beiden Schubkettensegmente 9ₛ₁ und 9ₛ₂ aus den gleichen Schubkettengliedern zusammengesetzt sind, sind die beiden Schubkettensegmente 9ₛ₁ und 9ₛ₂ um einen Winkel von 180 zueinander verdreht an dem Kraftübertragungselement 11 angeordnet, damit die Richtungsumlenkungen R_{U1} und R_{U2} durch die Umlenkeinrichtungen 12 und 10, 10a in entgegengesetzte Richtungen möglich ist. Es ist selbstverständlich ebenso möglich, dass die Umlenkung mittels des Umlenkkettenrades 10 bspw. in eine Richtung erfolgt, welche senkrecht zur Zeichnungsebene gerichtet ist, wie es in Figur 6 dargestellt ist. In Figur 6 sind zwei mögliche alternative Ausführungen eingezeichnet, wobei das Schubkettensegment 9_{s1´} (zweite Ausführungsform) mittels des Umlenkkettenrades 10 in Richtung R_{U1´}, d.h. zur Seite des Teleskoparmes 2 umgelenkt wird, so dass sich der Kettenvorratsspeicher 9v seitlich vom Teleskoparm 2 befindet. Die dritte alternative Ausführungsform ist unten rechts in Figur 6 dargestellt, wobei das Schubkettensegment 9_{s1´´} mittels des Umlenkkettenrades 10 in Richtung R_{U1´´}, d.h. zur Seite des Teleskoparmes 2 umgelenkt wird, so dass sich der Kettenvorratsspeicher 9v auf der anderen Seite des Teleskoparmes 2, verglichen mit der ersten in Figur 6 dargestellten Ausführungsform befindet.

Wie in Figur 2 dargestellt, werden mittels der Umlenkeinrichtung 12 die Schubkettenglieder des Schubkettensegmentes 9ₛ₁ in die Richtung R_{U2} umgelenkt. Die Schubkettenglieder sind derart konstruiert, dass sich das Schubkettensegment 9ₛ₂ lediglich mittels der Umlenkeinrichtung 12, welche gebogene Führungsflächen für die Schubkettenglieder aufweist, in die Richtung R_{U2} umlenken lässt. Entgegen der Richtung R_{U2} ist das Schubkettensegment 9ₛ₂ knicksteif. Figur 2 zeigt den Teleskoparm 2 im eingefahrenen Zustand. Der freie Endbereich 9v bzw. das freie Schubkettenende 9g des ersten Schubkettensegmentes 9ₛ₁, welcher bzw. welches noch nicht zur Kraftübertragung benötigt wird bzw. sich noch nicht im Bereich zwischen dem Umlenkzahnrad 10 und der Umlenkeinrichtung 12 befindet, wird platzsparend aufgerollt. Es ist jedoch auch möglich, dass das freie Ende 9g mäanderförmig oder parallel zum Teleskoparm 2 bevorratet wird.

Die Schubkettenanordnung ist mittels einer Führung F, welche an der dritten Teleskopstufe 2c angeordnet ist, geführt. Die Führung F kann, wie in Figur 12 dargestellt, durch ein U-Profil 18 gebildet sein. Optional kann der durch das U-Profil 18 gebildete Raum 20 mittels einer Deckelplatte 19 verschlossen sein. Mittels der Deckelplatte 19 wird verhindert, dass die Schubkette 9ₛᵢ ungewollt nach oben hin knickt.

Das erfindungsgemäße Stromabnehmersystem kann zudem eine Bremseinrichtung B aufweisen, mittels derer die Schubkettenanordnung 9 festsetzbar ist, so dass bei Ausfall des Schubkettenantriebes 8 sichergestellt werden kann, dass der Teleskoparm 2 in seiner momentanen Position verbleibt.

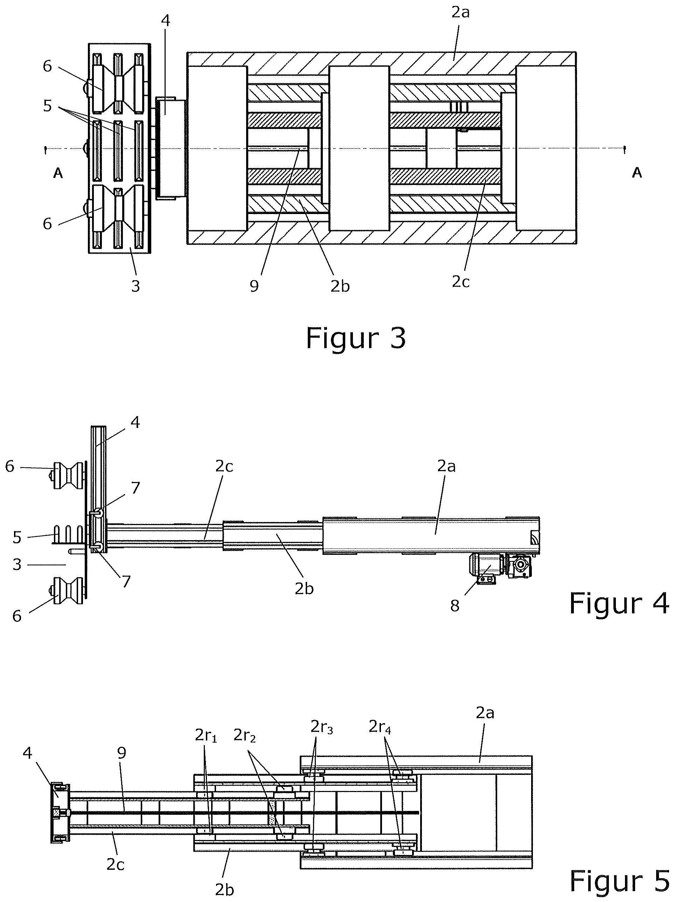

Die Figur 3 zeigt eine Draufsicht auf das eingefahrene Stromabnehmersystem 1, bestehend aus den Teleskopstufen 2a, 2b und 2c, der Schubkettenanordnung 9, der an der dritten Teleskopstufe 2c angeordneten vertikalen Führung 4 und dem Stromabnehmerwagen 3 mit seinen Stromabnehmern 5 und Führungsrollen 6.

Die Figuren 4 und 5 zeigen eine seitliche Ansicht sowie Draufsicht auf das ausgefahrene Stromabnehmersystem 1, bei dem die zweite und dritte Teleskopstufe 2b und 2c vollständig ausgefahren sind. Die Schubkettenanordnung 9 ist mittig zwischen den Gleitrollen 2r₁, 2r₂, 2r₃, 2r₄ des Teleskoparmes 2 angeordnet. Dabei sind die Gleitrollen 2r₁ am Ende der zweiten Teleskopstufe 2b und die Gleitrollen 2r₃ an der ersten fest am Fahrzeug angeordneten Teleskopstufe 2a drehbar gelagert und gleiten bzw. rollen in Führungen der dritten bzw. zweiten Teleskopstufe 2c bzw. 2b. Die Gleitrollen 2r₂ und 2r₄ sind jeweils am Ende der Teleskopstufen 2c bzw. 2b drehbar gelagert und laufen in entsprechenden Führungen der Teleskopstufen 2b und 2a. Beim Ausfahren des Teleskoparmes 2 wird die Schubkettenanordnung 9 mittels des Antriebes 8 in die Richtung R_{T} verstellt und drückt mit ihrem freien Ende 9e den Stromabnehmerwagen 3 nach oben. Da die Gewichtskraft des Stromabnehmerwagens 3 größer als die im Teleskoparm 2 auftretenden Reibkräfte ist, verbleibt der Stromabnehmerwagen 3 in seiner in Figur 4 dargestellten unteren Position so lange, bis der Teleskoparm 2 mit seinem Stromabnehmerwagen 3 gegen die in den Figuren 9a bis 9c dargestellte und erläuterte Anschlagplatte P anstößt. Die Anschlagplatte P verhindert ein weiteres Ausfahren des Teleskoparmes 2, wodurch die weiterhin in Richtung R_{T} angetriebene Schubkette 9 den Stromabnehmerwagen 3 nach oben drückt.

Wie bereits erläutert, zeigt Figur 6 zwei alternative, zweite und dritte, Ausführungsformen, bei denen das erste Schubkettensegment 9_{s1´} und 9_{s1´´} um die erste Achse A₁ herum gelenkt ist, wobei die Achse A1 parallel zur vertikalen Verstellrichtung Rᵥ ist. Bei dieser Ausgestaltung, befindet sich der Schubkettenvorratspeicher 9v seitlich neben dem Teleskoparm 2. Aufgrund der Tatsache, dass die erste Achse A₁ senkrecht zur zweiten Achse A₂ angeordnet ist, muss die Schubkettenanordnung zwei Schubkettensegmente 9ₛ₁ und 9ₛ₂ aufweisen, die zueinander um 90° verdreht angeordnet sind, wobei die beiden Schubkettensegmente 9ₛ₁ und 9ₛ₂ über das starre Verbindungselement 11 miteinander in Verbindung sind.

Die Figur 6b zeigt eine vierte mögliche Ausführungsform, bei der der Schubkettenvorratsspeicher 9v oberhalb des Teleskoparmes angeordnet ist. Dies hat den Vorteil, dass die beiden Umlenkrichtungen R_{U1} und R_{U2} in dieselbe Richtung weisen, so dass eine durchgehende Schubkette verwendet werden kann, da auch die beiden Achsen A₁ und A₂ parallel zueinander angeordnet sind.

Die Figur 7a zeigt eine fünfte mögliche Ausführungsform, bei der das Umlenken des zweiten Schubkettensegmentes 9ₛ₂ in Richtung R_{U2} um die zweite Achse A₂ herum mittels einer Umlenkrolle 14, welche auch als Kettenrad ausgebildet sein kann, und zwei weiteren Umlenkrollen 15, erfolgt. Die Umlenkrollen 15 können auch durch entsprechende Führungsflächen ersetzt werden. Die Achsen der Umlenkrollen 14, 15 sind senkrecht zur Zeichnungsebene ausgerichtet. Es ist möglich, dass in einer weiteren Ausbildung der fünften Ausführungsform das Umlenkkettenrad 14 mittels eines Umlenkantriebes angetrieben ist, so dass das zweite Schubkettensegment 9ₛ₂ relativ zur dritten Teleskopstufe 2c antreibbar oder festsetzbar ist. Durch Blockieren des Umlenkantriebes kann eine vertikale Bewegung des Stromabnehmerwagens 3 aktiv verhindert werden. So kann z.B. auf eine Prallplatte P verzichtet werden und der Stromabnehmerwagen 3, sofern entsprechende Sensoren und Steuerungen vorhanden sind, in die richtige Position zum Einfahren in die Stromschienenanordnung horizontal und vertikal mittels des Schubkettenantriebes 8 und des Umlenkantriebes positioniert werden. Bei entsprechender Ansteuerung kann der Stromabnehmerwagen 3 auch bereits während des Ausfahrens des Teleskoparmes 2 angehoben werden, so dass der Einfädelungsprozess beschleunigt werden kann.

Die Figur 7b zeigt eine vergrößerte Darstellung der bereits in Figur 2 dargestellten Umlenkeinrichtung 12, die gebogene Führungen für die Schubkette 9 aufweist.

Bei allen zuvor beschriebenen Ausführungsformen gilt, dass die Länge des zweiten Schubkettensegmentes 9ₛ₂ möglichst so ausgelegt ist, dass das Ende 11b des starren Kraftübertragungselementes 11 gerade noch nicht in den Umlenkbereich der Umlenkrollen 14, 15 gelangt, wenn der Stromabnehmerwagen 3 bereits maximal nach oben verfahren ist. Die Länge des Kraftübertragungselementes 11 kann wiederum so bemessen sein, dass es bei maximal eingefahrenem Teleskoparm 2 und vollständig heruntergefahrenem Stromabnehmerwagen 3 noch nicht in den Umlenkbereich des Schubkettenantriebes 8 gelangt. Bei einer derartigen Dimensionierung des Kraftübertragungselementes 11 können die Schubkettensegmente 9ₛ₁ und 9ₛ₂ besonders kurz ausgebildet werden, wodurch die Schubkettenanordnung hohe Schubkräfte übertragen kann und gleichzeitig kostengünstig herstellbar ist.

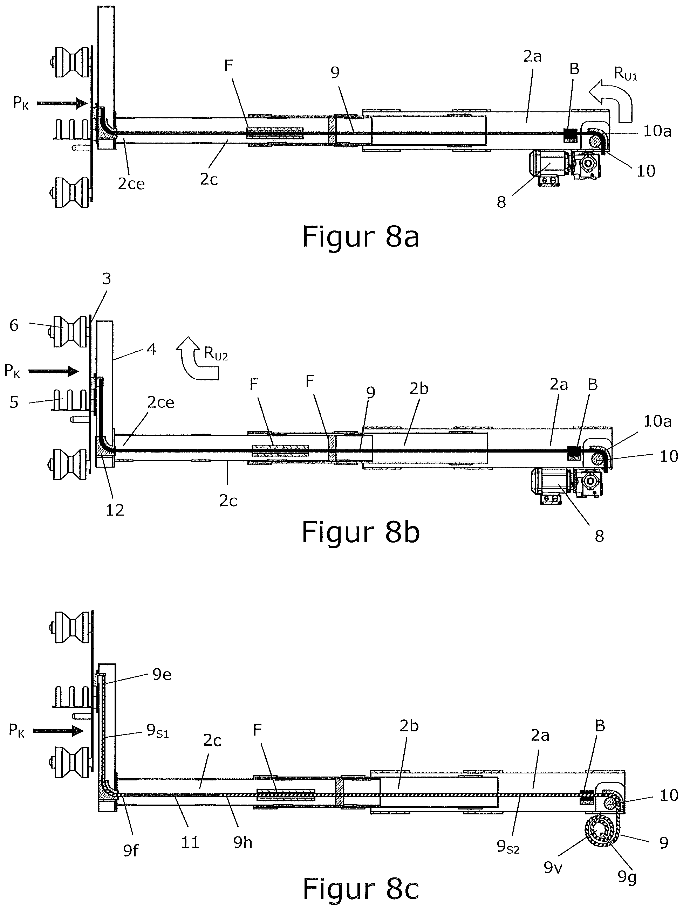

Die Figuren 8a bis 8c zeigen das Hochfahren des Stromabnehmerwagens 3, nachdem der Teleskoparm 2 soweit ausgefahren worden ist, bis sich der Stromabnehmerwagen 3 genau unterhalb der Stromschienen befindet bzw. gegen die nicht dargestellte Prallplatte P der Stromschienenanordnung S stößt. Die Figur 8a zeigt den Stromabnehmerwagen 3 in der untersten Position. Da aufgrund der Prallplatte P und der von dieser aufgebrachten Gegenkraft P_{K} der Teleskoparm 2 nicht weiter ausfahren kann, wird bei weiter in Richtung R_{T} angetriebener Schubkettenanordnung 9 das zweite Schubkettensegment 9ₛ₂ um die Umlenkeinrichtung 12 herum gelenkt und drückt mit seinem Ende 9e den Stromabnehmerwagen 3 nach oben. Dies erfolgt solange, bis vom Stromabnehmersystem erkannt wird, dass der Stromabnehmerwagen 3 seine höchste Position (Figur 8c) erreicht hat oder er mit seinen oberen Führungsrollen 6 gegen die Führungsrohre FS der Stromschienenanordnung anliegt bzw. drückt. Mittels der an der dritten Teleskopstufe 2c angeordneten Führung F wird die Schubkettenanordnung 9 innerhalb des Teleskoparmes 2 geführt. Die Bremseinrichtung B, mittels derer die Schubkettenanordnung 9 festsetzbar ist, so dass im Falle eines Ausfalls des Schubkettenantriebes 8 der Teleskoparm 2 und der Stromabnehmerwagen 3 in Position haltbar ist, kann zusätzlich auch als Kettenführung dienen.

Die Figuren 9a bis 9d zeigen den Einführungsprozess des Stromabnehmerwagens 3 in die Trasse T. Figur 9a zeigt den Beginn des Einführungsprozesses, nachdem das Fahrzeug so zur Prallplatte positioniert worden ist, dass der Stromabnehmerwagen 3 durch das Ausfahren des Teleskoparmes 2 horizontal gegen die Prallplatte P verstellt werden kann. Figur 9b zeigt den Zeitpunkt, an dem der Stromabnehmerwagen 3 gegen die Prallplatte P stößt und der Stromabnehmerwagen 3 sich noch in seiner untersten Stellung befindet. Anschließend wird, wie es bereits in den Figuren 8b und 8c dargestellt und beschrieben ist, durch das weitere Verstellen der Schubkettenanordnung 9 der Stromabnehmerwagen 3 vertikal nach oben verstellt, bis seine oberen Führungsrollen 6 gegen das Einführungsrohr FS drücken. Anschließend wird das nicht dargestellte Fahrzeug in Fahrtrichtung, welche senkrecht zur Zeichnungsebene ausgerichtet ist, verfahren, wodurch der Stromabnehmerwagen 3 mit seinen Rollen 6 auf die Fahrtrassenrohre FR auffährt und diese von oben und unten umgreift, so dass der Stromabnehmerwagen 3 durch die Fahrtrassenrohre sicher geführt und gehalten ist. Gleichzeitig greifen die Stromabnehmer 5, geführt von nicht dargestellten Einführtrichtern in die Stromschienen ST ein, wie es in Figur 9d dargestellt ist.

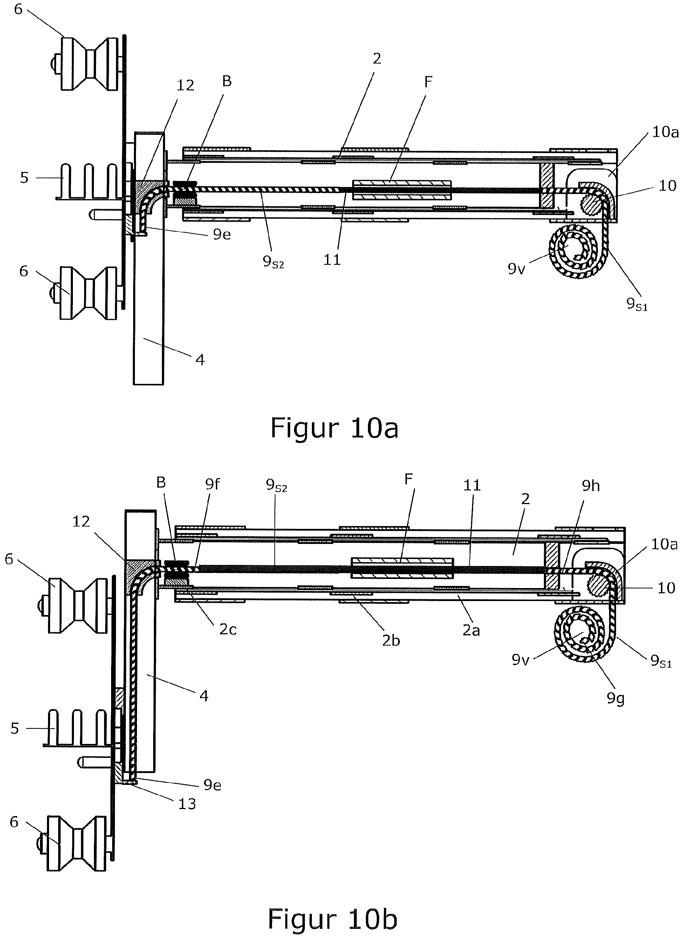

Die Figuren 10a und 10b zeigen eine weitere mögliche Ausführungsform, bei der der Stromabnehmerwagen 3 bei eingefahrenem Teleskoparm 2 in der oberen Position (Figur 10a) verweilt. Diese Ausführungsform wird benötigt, wenn der Stromabnehmerwagen zum Einführen in die Trasse auf ein unten angeordnetes, nicht dargestelltes, Einführungsrohr FS abgesenkt werden muss. Würde, wie es in Figur 10b dargestellt ist, die an der dritten Teleskopstufe 2c angeordnete Bremseinrichtung B gelöst und die Schubkettenanordnung 9 mittels des Schubkettenantriebes 8 in horizontaler Teleskopierrichtung R_{T} verstellt, würde sich zunächst der Stromabnehmerwagen 3 aufgrund seines Gewichts absenken, ohne dass der Teleskoparm 2 ausfährt. Da jedoch zunächst der Teleskoparm 2 ausgefahren bzw. teleskopiert werden muss, ist zunächst die Brems- oder Arretiereinrichtung B eingeschaltet, so dass sich der Stromabnehmerwagen 3 nicht absenken kann. Die Schubkettenanordnung 9 drückt die dritte Teleskopstufe 2c bei eingeschalteter Bremseinrichtung B aus der zweiten Teleskopstufe 2b und diese wiederum aus der ersten Teleskopstufe 2a heraus, bis der Stromabnehmerwagen 3 gegen die nicht dargestellte Prallplatte P der Trasse T stößt. Das Anstoßen muss mittels geeigneter Sensoren oder über den Motorstrom detektiert werden, wobei eine Steuereinrichtung die Bremseinrichtung B entsprechend ansteuert und löst, so dass sich bei weiterem Verstellen der Schubkettenanordnung 9 der Stromabnehmerwagen 3 auf das unten angeordnete Einführungsrohr FS der Trasse absenken kann. Es ist jedoch auch möglich, dass beim Anstoßen die Bremseinrichtung mechanisch gelöst wird. Nach dem Erreichen der unteren Einführungsposition kann dann in bekannter Weise das Fahrzeug in Fahrtrichtung verfahren werden, damit der Stromabnehmerwagen in die Stromschienenanordnung einfährt.

Die Figuren 11a und 11b zeigen zwei mögliche Ausführungsformen der verwendeten Schubkette 9ₛᵢ. Die Schubkette 9si besteht aus gelenkig miteinander verbundenen Schubkettengliedern 9k. Beide dargestellten Schubketten 9ₛᵢ können lediglich um die Umlenkrichtungen R_{U} umgelenkt werden. Entgegengesetzt zu der Umlenkrichtung R_{U} sind die Schubketten 9si knicksteif. Die Knicksteifigkeit wird durch die quer zur Schubrichtung R_{S} angeordneten Anlageflächen 9ka und 9kb erreicht. Es ist selbstverständlich möglich auch andere Formen von Schubketten für das erfindungsgemäße Stromabnehmersystem zu verwenden. Auch ist es möglich, zweigeteilte Schubketten zu verwenden, welche aus zunächst voneinander getrennten Halbschubketten bestehen. Erst durch die Zusammenführung der beiden Halbschubketten wird diese Art der Schubkette knicksteif und kann Schubkräfte übertragen.

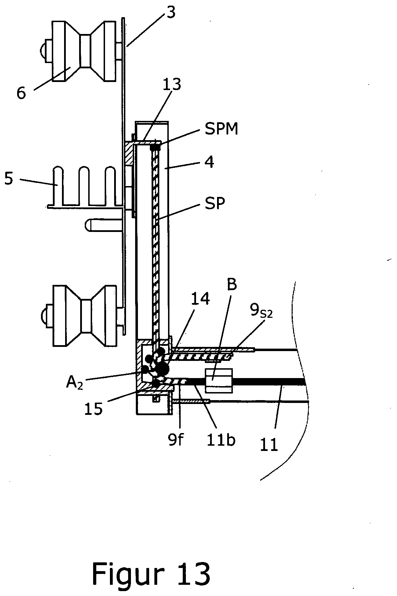

Die Figur 13 zeigt eine weitere mögliche Ausführungsform des erfindungsgemäßen Stromabnehmersystems, wobei der Stromabnehmerwagen 3 mittels eines Spindelantriebes SP vertikal hochgehoben oder abgesenkt werden kann. Die Spindel SP treibt eine drehfest mit dem Stromabnehmerwagen 3 bzw. dessen Teil 13 verbundene Spindelmutter SPM an. Die Spindel wird dabei über das Kettenrad 14 angetrieben, welches seinerseits von der Schubkettenanordnung 9 bzw. deren zweiten Kettensegmentes 9ₛ₂ antreibbar ist. Das zweite Kettensegment 9ₛ₂ wird mittels des Kettenrades 14 wieder zurück in den Kettenarm 2 bzw. die dritte Teleskopstufe 2c geführt. Mittels einer Bremseinrichtung B kann die Schubkette 9ₛ₂ relativ zur dritten Teleskopstufe 2c arretiert bzw. festgesetzt werden. Bei arretierter Schubkette 9ₛ₂ wird das Kettenrad 14 nicht verdreht, wodurch der Stromabnehmerwagen 3 vertikal in Position gehalten wird. Sofern die Bremseinrichtung B freigeschaltet ist, der Teleskoparm 2 bzw. der Stromabnehmerwagen 3 gegen die Prallplatte P drückt und der Schubkettenantrieb 8 die Schubkettenanordnung weiter in Richtung Teleskopieren ausfährt, treibt das zweite Schubkettensegment 9ₛ₂ das Kettenrad 14 an, wodurch die Spindel SP angetrieben und der Stromabnehmerwagen 3 nach oben verstellt wird.

## Patentansprüche

1. Stromabnehmersystem (1) für ein längs einer Stromschienenanordnung (S) verfahrbares Fahrzeug (F), mit mindestens einem Stromabnehmerwagen (3) und daran angeordneten Stromabnehmerkontakten (5), welche mit Stromschienen (ST) der Stromschienenanordnung (S) verbindbar sind, und einem am Fahrzeug (F) befestigbaren bzw. befestigten Teleskoparm (2), welcher mittels eines Verstellantriebes aus- und/oder einfahrbar ist, **dadurch gekennzeichnet, dass** der Verstellantrieb mindestens eine Schubkettenanordnung (9) aufweist, die von mindestens einem ersten Schubkettenantrieb (8) angetrieben ist, wobei die Schubkettenanordnung (9) zudem einen Stromabnehmerwagen (3) in vertikaler Richtung (R_{V}) verstellt.

2. Stromabnehmersystem (1) nach Anspruch 1, **dadurch gekennzeichnet, dass** der Teleskoparm (2) mindestens eine teleskopierbare Teleskopstufe (2b, 2c) aufweist und/oder die Schubkettenanordnung (9) an mindestens einer Teleskopstufe (2a, 2b, 2c) in Schubrichtung (R_{T}) geführt, gestützt und/oder gelagert ist, wobei insbesondere die Schubkettenanordnung (9) im Bereich zumindest einer, insbesondere zumindest an der weitesten ausfahrbaren, Teleskopstufe (2a, 2b, 2c) mittels einer Führung (F, B) und/oder einer Unterstützungsschiene geführt ist.

3. Stromabnehmersystem (1) nach Anspruch 1 oder 2, **dadurch gekennzeichnet, dass** die Schubketteanordnung (9) mit ihrem einen Ende (9e) an dem Stromabnehmerwagen (3) fest verbunden oder mittels einer Arretiereinrichtung verbindbar ist.

4. Stromabnehmersystem (1) nach einem der Ansprüche 1 bis 3, **dadurch gekennzeichnet, dass** die Schubkettenanordnung (9) mit ihrem einen Ende (9e) mit einem an dem Stromabnehmerwagen (3) angeordneten Anschlag oder Verbindungselement (13) zusammenwirkt.

5. Stromabnehmersystem (1) nach einem der vorhergehenden Ansprüche, **dadurch gekennzeichnet, dass** der erste Schubkettenantrieb (8) die Schubkettenanordnung (9) oder das erste Schubkettensegment (9ₛ₁) um eine erste Achse (A₁) herum lenkt.

6. Stromabnehmersystem (1) nach einem der vorhergehenden Ansprüche, **dadurch gekennzeichnet**, der Stromabnehmerwagen (3) an der am weitesten ausfahrbaren Teleskopstufe (2c) in vertikaler Richtung (R_{V}) verschieblich gelagert ist.

7. Stromabnehmersystem (1) nach einem der vorhergehenden Ansprüche, **dadurch gekennzeichnet, dass** an der am weitesten ausfahrbaren Teleskopstufe (2c) eine Umlenkeinrichtung (12; 14, 15) angeordnet ist, welche die Schubkettenanordnung (9) oder das zweite Schubkettensegment (9ₛ₂) um eine zweite Achse (A₂) herum umlenkt.

8. Stromabnehmersystem (1) nach Anspruch 7, **dadurch gekennzeichnet, dass** die Schubkettenanordnung (9) bis zur Umlenkeinrichtung (12; 14, 15) parallel zu den teleskopierbaren Teleskopstufen (2a, 2b, 2c) in Teleskopierrichtung (R_{T}) verläuft und die Umlenkeinrichtung (12; 14,15) die Schubkette (9ₛ₂) in eine quer oder senkrecht zur Teleskopierrichtung (R_{T}) verlaufende Richtung, insbesondere in die vertikale Richtung (R_{V}), oder in die entgegengesetzte Richtung zur Teleskopierrichtung (R_{T}) umlenkt.

9. Stromabnehmersystem (1) nach einem der Ansprüche 7 oder 8, **dadurch gekennzeichnet, dass** die Umlenkeinrichtung (14, 15), welche insbesondere ein Zahnrad bzw. Kettenrad (14) aufweist, mittels eines Umlenkantriebs angetrieben, antreibbar und/oder festsetzbar ist oder die Umlenkeinrichtung (12) gebogene Führungsflächen aufweist, die die Schubketteanordnung (9, 9ₛ₂) in einer Kurvenbahn führen, wobei die Schubkettenglieder (9k) beim Verlassen der Umlenkeinrichtung (12) zueinander gerade ausgerichtet sind und zueinander Schubkräfte übertagen können.

10. Stromabnehmersystem (1) nach Anspruch 9, **dadurch gekennzeichnet, dass** an der am weitesten ausfahrbaren Teleskopstufe (2c) oder an der Umlenkeinrichtung (14, 15) eine Bremseinrichtung und/oder ein weiterer Schubkettenantrieb angeordnet ist, mit dem die Schubkette (9, 9s2) relativ zum am weitesten ausfahrbaren Teleskopstufe (2c) verstellbar und/oder festsetzbar ist.

11. Stromabnehmersystem (1) nach Anspruch 9 oder 10, **dadurch gekennzeichnet, dass** der Umlenkantrieb bzw. der weitere Schubkettenantrieb von einer Steuerungseinheit des Stromabnehmersystems (1) gesteuert ist, derart, dass zum Ausfahren des Teleskoparmes (2) der Umlenkantrieb bzw. der weitere Schubkettenantrieb ein solches Antriebs- bzw. Haltemoment auf die Schubkettenanordnung (9) bzw. das zweite Schubkettensegment (9ₛ₂) erzeugt, dass sich die Schubkettenanordnung (9) relativ zur Umlenkeinrichtung (12; 14, 15) bzw. zur am weitesten ausfahrbaren Teleskopstufe (2c) nicht bewegt, und dass zum vertikalen Verstellen des Stromabnehmerwagens (3) der Umlenkantrieb bzw. der weitere Schubkettenantrieb mit dem ersten Schubkettenantrieb (8) synchronisiert ist, so dass sich die Länge des ausgefahrenen Teleskoparmes (2) nicht ändert und sich hierdurch der Stromabnehmerwagen (3) absenkt oder anhebt.

12. Stromabnehmersystem (1) nach einem der vorhergehenden Ansprüche, **dadurch gekennzeichnet, dass** die Schubkettenanordnung (9) mit ihrem freien Ende (9e) unmittelbar oder über ein Getriebe mit dem Stromabnehmerwagen (3) verbunden ist.

13. Stromabnehmersystem (1) nach einem der vorhergehenden Ansprüche, **dadurch gekennzeichnet, dass** die Schubkettenanordnung (9), insbesondere das zweite Schubkettensegment (9ₛ₂) einen Vertikalantrieb (SP, SPM) antreibt.

14. Stromabnehmersystem (1) nach einem der vorhergehenden Ansprüche, **dadurch gekennzeichnet, dass** der ausgefahrene und/oder der eingefahrene Teleskoparm (2) mittels mindestens einer Haltevorrichtung versteifbar ist, derart, dass die Teleskopstufen (2a, 2b, 2c), insbesondere in verschiedenen Positionen, relativ zueinander fixierbar sind und damit der Teleskoparm (2) in verschiedenen Ausfahrlängen versteifbar ist.

15. Stromabnehmersystem (1) nach einem der vorhergehenden Ansprüche, **dadurch gekennzeichnet, dass** mindestens eine Dämpfungsanordnung und/oder eine Feder zwischen der am weitesten ausfahrbaren Teleskopstufe (2c) und der zu dieser benachbarten Teleskopstufe (2b) angeordnet ist, die die Beschleunigung der am weitesten ausfahrbaren Teleskopstufe (2c) relativ zu der Schubkettenanordnung (9) verringert.

16. Stromabnehmersystem (1) nach einem der vorhergehenden Ansprüche, **dadurch gekennzeichnet, dass** eine Bremseinrichtung oder Arretiereinrichtung (B) an der am weitesten ausfahrbaren Teleskopstufe (2c) oder der ersten Teleskopstufe (2a) angeordnet ist, mittels derer eine Bremskraft auf die Schubkettenanordnung (9) bzw. das Schubkettensegment (9ₛ₁, 9ₛ₂) und/oder die Umlenkeinrichtung (14, 15) aufbringbar ist und/oder die Schubkettenanordnung (9) bzw. das Schubkettensegment (9ₛ₁, 9ₛ₂) relativ zur Teleskopstufe (2a, 2c) an der die Brems- bzw. Arretiereinrichtung (B) angeordnet ist, arretierbar ist.

17. Stromabnehmersystem (1) nach einem der vorhergehenden Ansprüche, **dadurch gekennzeichnet, dass** die Schubkettenanordnung (9) mindestens zwei Schubkettensegmente (9ₛ₁, 9ₛ₂) aufweist, welche jeweils aus mehreren Kettengliedern (9k) zusammengesetzt sind.

18. Stromabnehmersystem (1) nach einem der vorhergehenden Ansprüche, **dadurch gekennzeichnet, dass** zwischen zwei Kettensegmenten (9ₛ₁, 9ₛ₂) ein starres Kraftübertragungselement (11), insbesondere in Form einer Stange oder eines Rohres, angeordnet ist.

19. Stromabnehmersystem (1) nach Anspruch 17 oder 18, **dadurch gekennzeichnet, dass** die Schubkettensegmente (9ₛ₁, 9ₛ₂) um einen Winkel um die Teleskopierrichtung (R_{T}) zueinander verdreht angeordnet sind, derart, dass sich ein erstes Schubkettensegment (9ₛ₁) in eine erste Richtung (R_{U1}) um die erste Achse (A₁) und ein zweites Schubkettensegment (9ₛ₂) in eine zweite Richtung (R_{U2}) um die zweite Achse (A₂) umlenken lässt, wobei insbesondere die Achsen (A₁, A₂) parallel oder senkrecht zueinander angeordnet sind.

20. Stromabnehmersystem (1) nach einem der vorhergehenden Ansprüche, **dadurch gekennzeichnet, dass** die Steuerungseinheit den Schubkettenantrieb (8) und/oder den Umlenkantrieb steuert, wobei das Stromabnehmersystem (1) mittels mindestens einen Sensors und/oder anhand des durch den ersten Schubkettenantrieb (8) fließenden Motorstromes die horizontalen End- bzw. Anschlagspositionen des Teleskoparmes (2) bzw. seiner Teleskopstufen (2a, 2b, 2c) ermittelt und/oder mittels mindestens einen Sensors und/oder anhand des durch den Umlenkantrieb fließenden Stromes die vertikalen End- bzw. Anschlagspositionen des Stromabnehmerwagens (3) ermittelt.

21. Stromabnehmersystem (1) nach einem der vorhergehenden Ansprüche, **dadurch gekennzeichnet, dass** das Stromabnehmersystem (1) einen Grundkörper (2a), welcher auch durch die erste Teleskopstufe (2a) gebildet sein kann, aufweist, welcher an dem Fahrzeug (F) angeordnet, insbesondere befestigbar, ist, wobei an dem Grundkörper (2a) der erste Schubkettenantrieb (8) befestigt ist, und der Grundkörper (2a) den nicht zur Erzeugung einer Schub- oder Zugkraft verwendeten Teil bzw. Schubkettenvorrat (9v) der Schubkettenanordnung (9) aufnimmt.

22. Anlage, insbesondere Krananlage oder Förderanlage, mit einem längs einer Stromschienenanordnung (S) verfahrbaren Fahrzeug (F), insbesondere Kran oder Förderfahrzeug, mit mindestens einem Stromabnehmersystem (1) nach einem der vorhergehenden Ansprüche.

23. Verfahren zum Kontaktieren der Stromabnehmer (5) des Stromabnehmersystems (1) nach einem der Ansprüche 1 bis 23 mit Stromschienen (ST) der Stromschienenanordnung (S), **dadurch gekennzeichnet, dass** das verfahrbare Fahrzeug (F), insbesondere Kran, zunächst neben der Stromschienenanordnung (S) platziert wird, wonach dann der Teleskoparm (2) mittels des ersten Schubkettenantriebes (8) horizontal ausgefahren wird, bis der Stromabnehmerwagen (3) in horizontaler Richtung (R_{T}) relativ zu der Stromschienenanordnung (S) ausgerichtet ist und damit seine horizontale Kontaktposition erreicht hat, wonach dann der Stromabnehmerwagen (3) mittels des Schubkettenantriebes (8) vertikal verstellt wird, bis die Stromabnehmer (5) im Bereich von Einführtrichtern sind.

24. Verfahren nach Anspruch 23 **dadurch gekennzeichnet, dass** der Schubkettenantrieb (8) den Teleskoparm (2) solange horizontal ausfährt, bis der Stromabnehmerwagen (3) oder die am weitesten ausfahrbare Teleskopstufe (2c) gegen eine an der Stromschienenanordnung (S) angeordnete Prallplatte (P) anstößt.

25. Verfahren nach einem der Ansprüche 23 oder 24, **dadurch gekennzeichnet, dass** nach erfolgtem Einfahren des Stromabnehmerwagens in die Stromschienenanordnung (S) der bzw. die Schubkettenantrieb(e) (8) und sofern vorhanden, auch der Umlenkantrieb und die Bremseinrichtung (B) stromlos geschaltet werden, derart, dass sich die Ausfahrlänge des Teleskoparmes (2) dem sich ändernden Abstand des Fahrzeuges (F) zur Stromschienenanordnung (S) und die vertikale Höhe des Stromabnehmerwagens (3) relativ zum Teleskoparm (2) anpassen kann.

## Claims

1. Current collector system (1) for a vehicle (F) that can be moved along a power rail arrangement (S), with at least one current collector carriage (3) and current collector contacts (5) arranged thereon which can be connected to power rails (ST) of the current collector arrangement (S), and a telescopic arm (2) that can be or is fastened to the vehicle (F) which can be extended and/or retracted by means of an adjusting drive, **characterised in that** the adjusting drive has at least one rigid chain arrangement (9), which is driven by at least one first rigid chain drive (8), wherein the rigid chain arrangement (9) also adjusts a current collector carriage (3) in the vertical direction (R_{V}).

2. Current collector (1) according to claim 1, **characterised in that** the telescopic arm (2) has at least one telescopable telescopic stage (2b, 2c) and/or the rigid chain arrangement (9) is guided, supported and/or mounted on at least one telescopic stage (2a, 2b, 2c) in a direction of thrust (R_{T}), wherein in particular the rigid chain arrangement (9) is guided in a region of at least one, in particular at least at the furthest extendible telescopic stage (2a, 2b, 2c) by means of a guide (F, B) and/or a support rail.

3. Current collector system (1) according to claim 1 or 2, **characterised in that** the rigid chain arrangement (9) is fixedly connected with its one end (9e) to the current collector carriage (3) or can be connected by means of a locking mechanism.

4. Current collector system (1) according to any one of claims 1 to 3, **characterised in that** the rigid chain arrangement (9) cooperates with its one end (9e) with a stop or connecting element (13) arranged on the current collector carriage (3).

5. Current collector system (1) according to any one of the preceding claims, **characterised in that** the first rigid chain drive (8) deflects the rigid chain arrangement (9) or the first rigid chain segment (9_{S1}) about a first axis (A₁).

6. Current collector system (1) according to any one of the preceding claims, **characterised in that** the current collector carriage (3) is mounted on the furthest extendible telescopic stage (2c) so as to be displaceable in the vertical direction (R_{V}).

7. Current collector system (1) according to any one of the preceding claims, **characterised in that** a deflecting mechanism (12; 14, 15) is arranged on the furthest extendible telescopic stage (2c) which deflects the rigid chain arrangement (9) or the second rigid chain segment (9_{S2}) about a second axis (A₂).

8. Current collector system (1) according to claim 7, **characterised in that** the rigid chain arrangement (9) runs up to the deflecting mechanism (12; 14, 15) parallel to the telescopable telescopic stages (2a, 2b, 2c) in the telescoping direction (R_{T}) and the deflecting mechanism (12; 14, 15) deflects the rigid chain (9_{S2}) in a direction running transverse or perpendicular to the telescoping direction (R_{T}), in particular in the vertical direction (R_{V}) or in the opposite direction to the telescoping direction (R_{T}).

9. Current collector system (1) according to any one of claims 7 or 8, **characterised in that** the deflecting mechanism (14, 15), which has in particular a gear wheel or chain wheel (14), can be driven, moved and/or fixed by means of a deflection drive or the deflecting mechanism (12) has curved guiding surfaces which guide the rigid chain arrangement (9, 9_{S2}) in a curved path, wherein the rigid chain links (9k) are aligned straight relative to one another when they leave the deflecting mechanism (12) and can transfer thrust to one another.

10. Current collector system (1) according to claim 9, **characterised in that** a braking mechanism and/or a further rigid chain drive is arranged on the furthest extendible telescopic stage (2c) or on the deflecting mechanism (14, 15), with which the rigid chain (9, 9ₛ₂) can be adjusted and/or fixed relative to the furthest extendible telescopic stage (2c).

11. Current collector system (1) according to claim 9 or 10, **characterised in that** the deflection drive or the further rigid chain drive is controlled by a control unit of the current collector system (1) such that in order to extend the telescopic arm (2), the deflection drive or the further rigid chain drive generates a drive or holding torque on the rigid chain arrangement (9) or the second rigid chain segment (9ₛ₂) such that the rigid chain arrangement (9) does not move relative to the deflecting mechanism (12; 14, 15) or the furthest extendible telescopic stage (2c), and **in that**, for the vertical adjustment of the current collector carriage (3), the deflecting drive or the further rigid chain drive is synchronised with the first rigid chain drive (8) such that the length of the extended telescopic arm (2) does not change and, as a result of this, the current collector carriage (3) is lifted or lowered.

12. Current collector system (1) according to any one of the preceding claims, **characterised in that** the rigid chain arrangement (9) is connected with its free end (9e) directly or via a gear to the current collector carriage (3).

13. Current collector system (1) according to any one of the preceding claims, **characterised in that** the rigid chain arrangement (9), in particular the second rigid chain segment (9ₛ₂), drives a vertical drive (SP, SPM).

14. Current collector system (1) according to any one of the preceding claims, **characterised in that** the extended and/or the retracted telescopic arm (2) can be braced by means of at least one holding mechanism such that the telescopic stages (2a, 2b, 2c), in particular in different positions, can be fixed relative to one another and therefore the telescopic arm (2) can be braced at various extension lengths.

15. Current collector system (1) according to any one of the preceding claims, **characterised in that** at least one damping arrangement and/or a spring is arranged between the furthest extendible telescopic stage (2c) and the telescopic stage (2b) adjacent thereto, which reduces the acceleration of the furthest extendible telescopic stage (2c) relative to the rigid chain arrangement (9).

16. Current collector system (1) according to any one of the preceding claims, **characterised in that** a braking mechanism or locking mechanism (B) is arranged on furthest extendible telescopic stage (2c) or on the first telescopic stage (2a) and can exert a braking force on the rigid chain arrangement (9) or on the rigid chain segment (9ₛ₁, 9ₛ₂) and/or on the deflecting mechanism (14, 15) and/or can lock the rigid chain arrangement (9) or the rigid chain segment (9ₛ₁, 9ₛ₂) relative to the telescopic stage (2a, 2c) on which the braking or locking mechanism (B) is arranged.

17. Current collector system (1) according to any one of the preceding claims, **characterised in that** the rigid chain arrangement (9) has at least two rigid chain segments (9ₛ₁, 9ₛ₂) that are each made up of several chain links (9k).

18. Current collector system (1) according to any one of the preceding claims, **characterised in that** a rigid force transfer element (11), in particular in the form of a rod or a tube, is arranged between two chain segments (9ₛ₁, 9ₛ₂).

19. Current collector system (1) according to claim 17 or 18, **characterised in that** the rigid chain segments (9ₛ₁, 9ₛ₂) are arranged twisted towards one another at an angle in the telescoping direction (R_{T}) such that a first rigid chain segment (9_{S1}) can be deflected in a first direction (R_{U1}) about the first axis (A₁) and a second rigid chain segment (9_{S2}) can be deflected in a second direction (R_{U2}) about the second axis (A₂), wherein in particular the axes (A₁, A₂) are arranged parallel or perpendicular to one another.

20. Current collector system (1) according to any one of the preceding claims, **characterised in that** the control unit controls the rigid chain drive (8) and/or the deflection drive, wherein the current collector system (1) by means of at least one sensor and/or using the motor current flowing through the first rigid chain drive (8) determines the horizontal end or stop positions of the telescopic arm (2) or its telescopic stages (2a, 2b, 2c) and/or by means of at least one sensor and/or using the current flowing through the deflection drive determines the vertical end or stop positions of the current collector carriage (3).

21. Current collector system (1) according to any one of the preceding claims, **characterised in that** the current collector system (1) has a base body (2a), which can also be formed by the first telescopic stage (2a), which is arranged, in particular can be fastened to the vehicle (F), wherein the first rigid chain drive (8) is fastened to the base body (2a) and the base body (2a) takes in the part or rigid chain reserve (9v) of the rigid chain arrangement (9) not being used to generate thrust or traction.

22. System, in particular crane or conveyor system, comprising a vehicle (F), in particular a crane or a conveyor vehicle that can be moved along a power rail arrangement (S) with at least one current collector system (1) according to any one of the preceding claims.

23. Method for contacting the current collector (5) of the current collector system (1) according to any one of claims 1 to 23 with power rails (ST) of the current collector arrangement (S), **characterised in that** the movable vehicle (F), in particular the crane, is firstly placed next to the power rail arrangement (S), after which the telescopic arm (2) is extended horizontally by means of the first rigid chain drive (8) until the current collector carriage (3) is aligned in the horizontal direction (R_{T}) relative to the power rail arrangement (S) and therefore has reached its horizontal contact position, after which the current collector carriage (3) is adjusted vertically by means of the rigid chain drive (8) until the current collectors (5) are in the region of insertion funnels.

24. Method according to claim 23, **characterised in that** the rigid chain drive (8) extends the telescopic arm (2) horizontally until the current collector carriage (3) or the furthest extendible telescopic stage (2c) abuts against an impact plate (P) arranged on the power rail arrangement (S).

25. Method according to claims 23 or 24, **characterised in that** after successful insertion of the current collector carriage into the power rail arrangement (S), the rigid chain drive(s) (8) and, if available, also the deflection drive and the brake mechanism (B) are switched currentless such that the extendible length of the telescopic arm (2) can be adapted to the varying distance of the vehicle (F) to the power rail arrangement (S) and the vertical height of the current collector carriage (3) relative to the telescopic arm (2).

## Revendications

1. Système collecteur de courant (1) pour un véhicule (F) pouvant se déplacer le long d'un arrangement de rails conducteurs (S), comprenant au moins un chariot collecteur de courant (3) et des contacts collecteurs de courant (5) disposés sur celui-ci, qui peut être relié à des rails conducteurs (ST) de l'arrangement de rails conducteurs (S), et un bras télescopique pouvant être fixé ou fixé au véhicule (F), lequel peut être sorti et/ou rentré au moyen d'un mécanisme d'entraînement de positionnement, **caractérisé en ce que** le mécanisme d'entraînement de positionnement possède au moins un arrangement de chaînes de poussée (9), qui est entraîné par au moins un premier mécanisme d'entraînement de chaînes de poussée (8), l'arrangement de chaînes de poussée (9) positionnant en outre le chariot collecteur de courant (3) dans la direction verticale (R_{V}).

2. Système collecteur de courant (1) selon la revendication 1, **caractérisé en ce que** le bras télescopique (2) possède au moins un étage télescopique (2b, 2c) pouvant accomplir un mouvement télescopique et/ou l'arrangement de chaînes de poussée (9) est guidé, soutenu et/ou supporté au niveau d'au moins un étage télescopique (2a, 2b, 2c) dans le sens de la poussée (R_{T}), l'arrangement de chaînes de poussée (9) étant notamment guidé au moyen d'un guide (F, B) et/ou d'un rail de soutien dans la zone d'au moins un étage télescopique (2a, 2b, 2c), notamment au moins au niveau de celui qui peut sortir le plus loin.

3. Système collecteur de courant (1) selon la revendication 1 ou 2, **caractérisé en ce que** l'arrangement de chaînes de poussée (9) est relié à demeure au chariot collecteur de courant (3) par l'une de ses extrémités (9e) ou peut y être relié au moyen d'un dispositif de blocage.

4. Système collecteur de courant (1) selon l'une des revendications 1 à 3, **caractérisé en ce que** l'arrangement de chaînes de poussée (9) coopère par l'une de ses extrémités (9e) avec une butée ou un élément de liaison (13) disposé sur le chariot collecteur de courant (3).

5. Système collecteur de courant (1) selon l'une des revendications précédentes, **caractérisé en ce que** le premier mécanisme d'entraînement de chaînes de poussée (8) renvoie l'arrangement de chaînes de poussée (9) ou le premier segment de chaînes de poussée (9ₛ₁) autour d'un premier axe (A₁).

6. Système collecteur de courant (1) selon l'une des revendications précédentes, **caractérisé en ce que** le chariot collecteur de courant (3) est monté coulissant dans la direction verticale (R_{V}) sur l'étage télescopique (2c) qui peut sortir le plus loin.

7. Système collecteur de courant (1) selon l'une des revendications précédentes, **caractérisé en ce qu'**un dispositif de renvoi (12 ; 14, 15) est disposé sur l'étage télescopique (2c) qui peut sortir le plus loin, lequel renvoie l'arrangement de chaînes de poussée (9) ou le deuxième segment de chaînes de poussée (9ₛ₂) autour d'un deuxième axe (A₂).

8. Système collecteur de courant (1) selon la revendication 7, **caractérisé en ce que** l'arrangement de chaînes de poussée (9), jusqu'au dispositif de renvoi (12; 14, 15), suit un tracé parallèle aux étages télescopiques (2a, 2b, 2c) pouvant accomplir un mouvement télescopique dans la direction du mouvement télescopique (R_{T}) et le dispositif de renvoi (12 ; 14, 15) renvoie la chaîne de poussée (9ₛ₂) dans une direction qui suit un tracé transversal ou perpendiculaire à la direction du mouvement télescopique, notamment dans la direction verticale (R_{V}) ou dans la direction opposée à la direction du mouvement télescopique (R_{T}).

9. Système collecteur de courant (1) selon l'une des revendications 7 ou 8, **caractérisé en ce que** le dispositif de renvoi (14, 15), lequel possède notamment une roue dentée ou une roue à chaîne (14), est entraîné, entraînable et/ou immobilisable au moyen d'un mécanisme d'entraînement de renvoi, ou le dispositif de renvoi (12) possède des surfaces de guidage courbes qui guident l'arrangement de chaînes de poussée (9, 9ₛ₂) dans une trajectoire courbe, les maillons de chaîne de poussée (9k), en quittant le dispositif de renvoi (12), étant orientés de manière rectiligne les uns par rapport aux autres et pouvant transmettre les forces de poussée les uns aux autres.

10. Système collecteur de courant (1) selon la revendication 9, **caractérisé en ce qu'**un dispositif de freinage et/ou un mécanisme d'entraînement de chaîne de poussée supplémentaire est disposé sur l'étage télescopique (2c) qui peut sortir le plus loin ou sur le dispositif de renvoi (14, 15), avec lequel la chaîne de poussée (9, 9ₛ₂) peut être positionnée et/ou immobilisée par rapport à l'étage télescopique (2c) qui peut sortir le plus loin.

11. Système collecteur de courant (1) selon la revendication 9 ou 10, **caractérisé en ce que** le mécanisme d'entraînement de renvoi ou le mécanisme d'entraînement de chaîne de poussée supplémentaire est commandé par une unité de commande du système collecteur de courant (1) de telle sorte que pour faire sortir le bras télescopique (2), le mécanisme d'entraînement de renvoi ou le mécanisme d'entraînement de chaîne de poussée supplémentaire génère un moment d'entraînement ou de maintien sur l'arrangement de chaînes de poussée (9) ou sur le deuxième segment de chaînes de poussée (9ₛ₂) tel que l'arrangement de chaînes de poussée (9) ne se déplace pas par rapport au dispositif de renvoi (12 ; 14, 15) ou à l'étage télescopique (2c) qui peut sortir le plus loin, et **en ce qu'**en vue du positionnement vertical du chariot collecteur de courant (3), le mécanisme d'entraînement de renvoi ou le mécanisme d'entraînement de chaîne de poussée supplémentaire est synchronisé avec le mécanisme d'entraînement de chaîne de poussée (8) de sorte que la longueur du bras télescopique (2) sorti ne varie pas et entraîne ainsi un abaissement ou une montée du chariot collecteur de courant (3).

12. Système collecteur de courant (1) selon l'une des revendications précédentes, **caractérisé en ce que** l'arrangement de chaînes de poussée (9) est relié au chariot collecteur de courant (3) par son extrémité libre (9e) ou par le biais d'un engrenage.

13. Système collecteur de courant (1) selon l'une des revendications précédentes, **caractérisé en ce que** l'arrangement de chaînes de poussée (9), notamment le deuxième segment de chaînes de poussée (9ₛ₂), entraîne un mécanisme d'entraînement vertical (SP, SPM).

14. Système collecteur de courant (1) selon l'une des revendications précédentes, **caractérisé en ce que** le bras télescopique (2) sorti et/ou rentré peut être rigidifié au moyen d'au moins un dispositif de maintien de telle sorte que les étages télescopiques (2a, 2b, 2c) peuvent être calés les uns par rapport aux autres, notamment dans différentes positions, et ainsi le bras télescopique (2) peut être rigidifié dans différentes longueurs de sortie.

15. Système collecteur de courant (1) selon l'une des revendications précédentes, **caractérisé en ce qu'**au moins un arrangement amortisseur et/ou un ressort est disposé entre l'étage télescopique (2c) qui peut sortir le plus loin et l'étage télescopique (2b) voisin de celui-ci, lequel réduit l'accélération de l'étage télescopique (2c) qui peut sortir le plus loin par rapport à l'arrangement de chaînes de poussée (9).

16. Système collecteur de courant (1) selon l'une des revendications précédentes, **caractérisé en ce qu'**un dispositif de freinage ou un dispositif d'arrêt (B) est disposé sur l'étage télescopique (2c) qui peut sortir le plus loin ou le premier étage télescopique (2a), au moyen duquel une force de freinage peut être appliquée sur l'arrangement de chaînes de poussée (9) ou le segment de chaînes de poussée (9ₛ₁, 9ₛ₂) et/ou sur le dispositif de renvoi (14, 15) et/ou l'arrangement de chaînes de poussée (9) ou le segment de chaînes de poussée (9ₛ₁, 9ₛ₂) peut être stoppé par rapport à l'étage télescopique (2a, 2c) sur lequel est disposé le dispositif de freinage ou un dispositif d'arrêt (B).

17. Système collecteur de courant (1) selon l'une des revendications précédentes, **caractérisé en ce que** l'arrangement de chaînes de poussée (9) possède au moins deux segments de chaînes de poussée (9ₛ₁, 9ₛ₂) qui sont respectivement composés de plusieurs maillons de chaîne (9k).

18. Système collecteur de courant (1) selon l'une des revendications précédentes, **caractérisé en ce qu'**entre deux segments de chaînes de poussée (9ₛ₁, 9ₛ₂) est disposé un élément de transmission de force (11) rigide, notamment sous la forme d'une tige ou d'un tube.

19. Système collecteur de courant (1) selon la revendication 17 ou 18, **caractérisé en ce que** les segments de chaînes de poussée (9ₛ₁, 9ₛ₂) sont disposés avec une torsion l'un par rapport à l'autre selon un certain angle autour de la direction du mouvement télescopique (R_{T}) de sorte qu'un premier segment de chaînes de poussée (9ₛ₁) peut être renvoyé dans une première direction (R_{U1}) autour du premier axe (A₁) et un deuxième segment de chaînes de poussée (9ₛ₂) dans une deuxième direction (R_{U2}) autour du deuxième axe (A₂), les axes (A₁, A₂) étant notamment disposés parallèlement ou perpendiculairement l'un à l'autre.

20. Système collecteur de courant (1) selon l'une des revendications précédentes, **caractérisé en ce que** l'unité de commande commande le mécanisme d'entraînement de chaînes de poussée (8) et/ou le mécanisme d'entraînement de renvoi, le système collecteur de courant (1) déterminant les positions finales ou de butée horizontales du bras télescopique ou de ses étages télescopiques (2a, 2b, 2c) au moyen d'au moins un capteur et/ou à l'aide du courant de moteur qui circule à travers le premier mécanisme d'entraînement de chaînes de poussée (8) et/ou déterminant les positions finales ou de butée verticales du bras télescopique ou de ses étages télescopiques (2a, 2b, 2c) au moyen d'au moins un capteur et/ou à l'aide du courant qui circule à travers le premier mécanisme d'entraînement de renvoi.

21. Système collecteur de courant (1) selon l'une des revendications précédentes, **caractérisé en ce que** le système collecteur de courant (1) possède un corps de base (2a), lequel peut également être formé par le premier étage télescopique (2a), lequel est disposé, notamment peut être fixé, au niveau du véhicule (F), le premier mécanisme d'entraînement de chaînes de poussée (8) étant fixé au corps de base (2a) et le corps de base (2a) accueillant la partie ou la réserve de chaînes de poussée (9v) de l'arrangement de chaînes de poussée (9) non utilisée pour produire la force de poussée ou de traction.

22. Installation, notamment installation de grutage ou installation de convoyage, comprenant un véhicule (F) pouvant se déplacer le long d'un arrangement de rails conducteurs (S), notamment une grue ou un véhicule de convoyage, comprenant au moins un système collecteur de courant (1) selon l'une des revendications précédentes.

23. Procédé de mise en contact des collecteurs de courant (5) du système collecteur de courant (1) selon l'une des revendications 1 à 23 avec des rails conducteurs (ST) de l'arrangement de rails conducteurs (S), **caractérisé en ce que** le véhicule (F) mobile, notamment la grue, est tout d'abord placé à côté de l'arrangement de rails conducteurs (S), après quoi le bras télescopique (2) est alors sorti horizontalement au moyen du premier mécanisme d'entraînement de chaînes de poussée (8) jusqu'à ce que le chariot collecteur de courant (3) soit orienté en direction horizontale (R_{T}) par rapport à l'arrangement de rails conducteurs (S) et ait ainsi atteint sa position de contact horizontale, après quoi le chariot collecteur de courant (3) est positionné verticalement au moyen du mécanisme d'entraînement de chaînes de poussée (8) jusqu'à ce que les collecteurs de courant (5) se trouvent dans la zone des cônes d'insertion.

24. Procédé selon la revendication 23, **caractérisé en ce que** le mécanisme d'entraînement de chaînes de poussée (8) sort le bras télescopique (2) horizontalement jusqu'à ce que le chariot collecteur de courant (3) ou l'étage télescopique (2c) qui peut sortir le plus loin viennent en butée contre la plaque déflectrice (P) disposée au niveau de l'arrangement de rails conducteurs (S).

25. Procédé selon l'une des revendications 23 ou 24, **caractérisé en ce qu'**après avoir accompli la rentrée du chariot collecteur de courant dans l'arrangement de rails conducteurs (S), le ou les mécanismes d'entraînement de chaînes de poussée (8) et, s'ils sont présents, aussi le mécanisme d'entraînement de renvoi et le dispositif de freinage (B) sont mis hors tension de sorte que la longueur de sortie du bras télescopique (2) puisse s'adapter à l'écart variable entre le véhicule (F) et l'arrangement de rails conducteurs (S) et la hauteur verticale du chariot collecteur de courant (3) par rapport au bras télescopique (2).
